# EUROPEAN PATENT APPLICATION

(11) **EP 1 699 227 A1**
(43) Date of publication of application: **06.09.2006**
(21) Application number: 04807493.4
(22) Date of filing: 15.12.2004
(51) Int. Cl.: H04N 5/225, H04M 1/00, H04M 1/02

(54) **CAMERA UNIT AND MOBILE TERMINAL**

(30) Priority: 24.12.2003 JP 2003426684
(71) Applicant: Konica Minolta Opto, Inc., Hachioji-shi, Tokyo 192-8505 (JP)
(72) Inventor: IMAMURA, Junichi, c/o Konica Minolta Opto, Inc., Hachioji-shi, Tokyo 192-8505 (JP); KATAGIRI, Yoshito, c/o Konica Minolta Opto, Inc., Hachioji-shi, Tokyo 192-8505 (JP)
(74) Representative: Henkel, Feiler & Hänzel
(86) International application number: PCT/JP2004/019136
(87) International publication number: WO 2005/062601

(57) **Abstract**

To provide a camera unit, having plural interface sections and being able to appropriately transfer data, and a mobile terminal. Large data, such as image data is effectively transferred via first interface section 111 having relatively high transfer speed. On the other hand, since camera operation commands are relatively small, and are positively transferred via second transfer section 117 in a short time, error or malfunction is prevented. In addition, since the data transfer via at least one of first interface section 111 and second interface section 117 is connected via a single connector, the number of the parts is reduced and the scope of shield S around connector 112 is also reduced, therefore camera unit 100 can be downsized.

## Description

### TECHNICAL FIELD

The present invention relates to a camera and a mobile terminal, and in particular, to a mobile terminal such as a mobile phone or PDA (personal digital assistant), and preferably a camera unit which is used in the same.

### BACKGROUND ART

In recent years, since CPUs have offered highly technical advantages, as well as image processing technology has become highly developed, digital image data has become more readily usable by the user. Specifically, in the field of the mobile phones or PDAs, devices having a display section to display images have become more popular, and since the dramatic increase of digital transmission velocity of wireless communication holds great promise in the near future, it is supposed that image data will more and more be transferred by the mobile phone or the PDS.

Specifically in recent years, since mobile phones incorporating the camera unit including a solid state image sensor such as the CCD described in Patent Document 1 are available in the market, it has become easy to capture digital images, using these mobile phones. Further, it has also become easy to transfer digital data of the captured images to other mobile phones, without using a personal computer interface.

### [Patent Document 1] Unexamined Japanese Patent Application Publication No. 2000-134595

Further, data which is transferred between a digital camera unit and a processor of the mobile phone includes the image data and various operation commands. The volume of image data has become so large that the image data need to be transferred at high speed. Further, operation commands such as a shutter release command should be correctly transferred so as not to be incorrectly received by a receiving device. In Patent Document 1, two interfacing sections are provided to transfer the data between the camera unit and the processor of the mobile phone. However, since two connectors are employed to transfer the data via two interfacing sections, shields around the two connectors to prevent noise do not result in downsizing, but instead result in an increase of the number of parts. Further, in order to employ two connectors, the mounting area on a circuit board increases, which constitutes a limiting factor on downsizing, as well as increasing assembly manpower and time.

### DISCLOSURE OF INVENTION

The present invention is achieved in view of the above problems. It is therefore an object of the present invention to provide an improved camera unit and mobile terminal which are downsized and include reduced number of the electric parts to perform data transfer using plural interfaces.

In order to overcome the above problems, the present invention includes the following structures.
(1) An example of the present invention is a camera unit including image capturing lenses to capture light rays from a subject, an image sensor to receive the light rays from the subject captured by the image capturing lenses and to convert the light rays to image signals, a first interface section to transfer the data at a first transfer speed between the camera unit and the external device, a second interface section to transfer the data at a second transfer speed which is different from the first transfer speed, between the camera unit and the external device, and a control means to select the interface section to transfer the data with the external device based on the contents of the data to be transferred.
(2) An example of the present invention is the camera unit described in (1), wherein the first transfer speed is higher than the second transfer speed.
(3) An example of the present invention is the camera unit described in (1), wherein the data to be transferred via the first interface section includes image data.
(4) An example of the present invention is the camera unit described in (1), wherein the data to be transferred via the second interface section includes camera control commands.

### BRIEF DESCRIPTION OF THE DRAWING

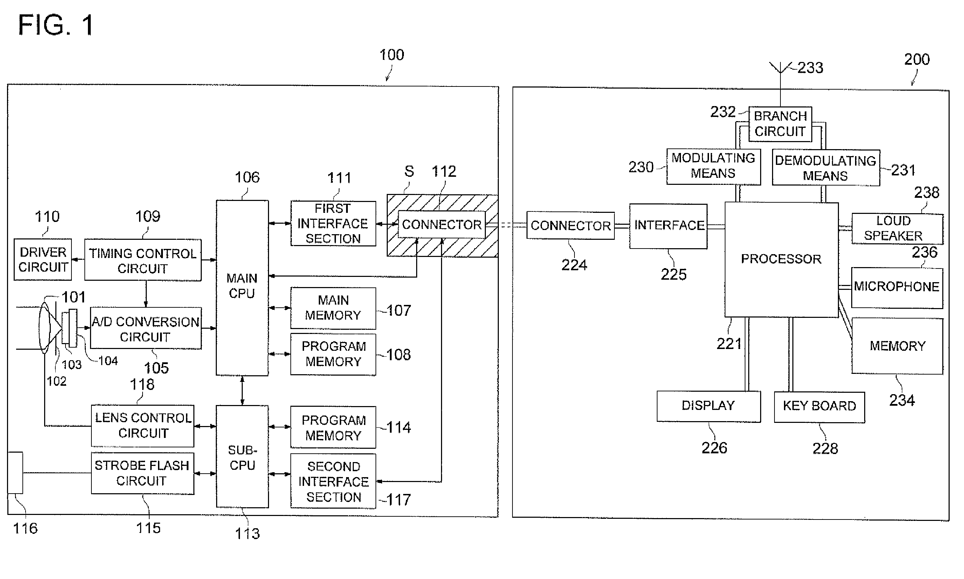

Fig. 1 is a block diagram of camera unit 100 and mobile terminal 200 which can be mounted onto camera unit 100, of the present embodiment.

### BEST MODE FOR CARRYING OUT THE INVENTION

The embodiment of the present invention will now be explained referring to the drawing. Fig. 1 is a block diagram of camera unit 100 and mobile terminal 200 which can be mounted onto camera unit 100, of the present embodiment.

In Fig. 1, numeral 101 represents image capturing lenses, and numeral 102 represents a diaphragm to control the amount of light which passes through image capturing lenses 101. Numeral 103 represents an image sensor to electrically convert the light rays gathered by image capturing lenses 101 to electrical signals, wherein the image sensor is described as a CCD in the present embodiment.

Numeral 104 represents an image capturing circuit, to receive the electrical signals from the CCD, and which also performs various image processes on the electrical signals and further creates predetermined image signals. Numeral 105 represents an A/D conversion circuit, which converts the analog image signals, created by image capturing circuit 104, to digital signals.

Numeral 106 represents a main CPU (serving as a control means) which executes programs stored in program memory 108, to control driver circuit 110 of CCD 1 via timing control circuit 109, and to control A/D conversion circuit 105. Further, main CPU 106 stores the digital signals from A/D conversion circuit 105 into main memory 107, and transfer the data, including the digital image signals, to the external device such as mobile phone 200 via first interface section 111.

In the present embodiment, sub-CPU 113 is provided which is connected to main CPU 106, and executes the programs stored in program memory 114, and thereby sub-CPU 113 controls flash strobe 116 via strobe flash circuit 115, and further drives lens control circuit 118 to allow image capturing lenses 101 to focus the subject image. Yet further, sub-CPU 113 is able to transfer the data to the external device, such as mobile phone 200, via second interface section 117.

Mobile terminal 200, which functions as an external device, includes modulating means 230 which is electrically connected to branch circuit 232 which is connected to antenna 233, demodulating means 231 which is also electrically connected to branch circuit 232, interface 225 which transfers the data with camera unit 100, display unit which displays the image, key board 228 via which the user inputs various data, detachable memory 234 to store the digital image signals, microphone 236 to collect image related sounds, speaker 238 to reproduce sounds, and processor 221 to control the above sections.

Connector 112 of camera unit 100 connects to connector 224 of mobile phone 200, then first interface section 111 and second interface section 117 of camera unit 100, are connected to interface 225 of mobile phone 200, and thereby, main CPU 106 and sub-CPU 113 are able to transfer data to processor 221. First interface section 111 has the maximum transfer rate of 20 Mbps, while second interface section 117 has that of several dozen to one hundred Kbps. In addition, by disconnecting connector 112 of camera unit 100 from connector 224 of mobile phone 200, camera unit 100 is independent of mobile phone 200. Shield S is illustrated in Fig. 1, to shield the noises from connector 112.

Under the condition that connector 112 of camera unit 100 is connected to connector 224 of mobile phone 200, it is possible for the user to capture images. In this case, when the user operates key board 228 of mobile phone 200, a shutter release command, being one of the camera control commands, is outputted from processor 221, and main CPU 106 receives the shutter release command via second interface section 117 and sub-CPU 113, whereby camera unit 100 performs the shutter release operation based on the received shutter release command. Specifically, the image of the subject is captured on an image receiving section of CCD 103 via image capturing lenses 101, the captured image is converted to electrical signals by CCD 103, and next, the electrical signals are converted to digital image signals via A/D conversion circuit 105. After which, main CPU 106 sends the digital image signals to processor 221 of mobile phone 200 via first interface section 111 and interface 225, and the digital image signals are stored in memory 234, or sent by air to the other terminals from antenna 233 via modulating means 230.

Based on the present embodiment, main CPU 106 determines the contents of data to be transferred, and selects one of interface sections 111 and 117 to be used for the transfer. Specifically, large amounts of data such as image data are transferred via first interface section 111 which has a relatively high transfer speed, by which the image data are effectively sent in a relatively short time. On the other hand, the camera control commands to control the operation of camera can be sent or received via second interface section 117, while being separated from the image data, whereby the camera control commands can be correctly transferred at optimum timing, which perform image capturing with high accuracy. In addition, since the camera control commands include small amount of data to be sent at the same time, there is no need to use the high speed interface, accordingly, concerning the ability of second interface section 117, the relatively slow transfer speed can be used effectively.

Still further, the data which is to be transferred via at least either first interface section 111 or second interface section 117, is transferred only via single connector 112. Accordingly, the number of parts is reduced, and the scope of shield S provided around connector 112 can also be reduced, which results in downsizing of camera unit 100.

Yet further, the types of data preferably transferred via first interface section 111, are moving image data, and preview image data. On the other hand, the type of data preferably transferred via second interface section 117 is program file. In addition, in the present embodiment, camera unit 100 and mobile phone 200 are connected by connectors 112 and 224 so that only a single communication line is established. However, it is possible to provide an exclusive communication line for first interface section 111, and an exclusive communication line for second interface section 117. In the present embodiment, sub-CPU 113 directly communicates with mobile phone 200 via second interface section 117. However, it is also possible for the embodiment that main CPU communicates via first and second interface sections 111 and 117, and sub-CPU communicates with main CPU.

While the preferred embodiments of the present invention have been described using specific terms, such descriptions are for illustrative purposes only, and it is to be understood that changes and variations may be made without departing from the spirit or scope of the appended claims. Further, it is to be understood that the camera unit of the present invention can be installed in mobile phones and mobile terminals such as PDAs.

### EFFECTS OF THE INVENTION

Concerning the industrial applicability of the present invention, the camera unit includes image capturing lenses, an image sensor to receive light from a subject via the image capturing lenses and to convert light to image signals, a first interface section to transfer data at a first transfer speed to an external device, a second interface section to transfer data at a second transfer speed, differing from the first transfer speed, to the external device, and a single connector to electrically connect the external device to the first and second interface sections.

Accordingly, the camera unit can transfer data via at least one of the first and the second interface sections.

Therefore, large amounts of data such as image data can be transferred via first interface section 111 which has a relatively high transfer speed, so that image data are effectively sent in a short time.

On the other hand, the camera control commands, having small amount of data, operate the control of the camera, and can be sent or received via second interface section 117, separate from the image data, whereby the camera control commands can be quickly transferred at optimum timing, which accurately performs image capturing.

In addition, since the data which is performed via at least one of first interface section 111 and second interface section 117, is performed via only single connector 112, the number of parts is reduced, and the scope of shielding provided around the connector can also be reduced, enabling downsizing of the camera unit.

Yet further, compared to the case in which two connectors are used, the size of the circuit board, used in the present invention, is reduced, but the function of the circuit board is thereby not reduced.

Yet further, assembling manpower and time are reduced, which tends to prevent from occurring of the connecting error.

In addition, the first transfer speed is greater than 1 Mbps, while the second transfer rate is less than 1 Mbps.

## Claims

1. A camera unit is **characterized in that**:
image capturing lens;
an image sensor to receive the light rays from the subject captured by the image capturing lens and to convert the light rays to image data signals;
a first interface section to transfer data at a first transfer speed to the external device;
a second interface section to transfer data at a second transfer speed which is different from the first transfer speed, to the external device; and
a single connector in which the first interface section and the second interface section are electrically connected to the external device;
wherein the data is transferred between the camera unit and the external device through at least one of the first interface section and the second transfer section.

2. The camera unit in Claim 1 is **characterized in that** the first transfer speed is higher than the second transfer speed.

3. The camera unit in Claim 1 is **characterized in that** the data to be transferred via the first interface section includes the image data.

4. The camera unit in Claim 1 is **characterized in that** the data to be transferred via the second interface section includes the camera control commands.

5. A mobile terminal is **characterized in that** the camera unit in Claim 1 is connected through the single connector.
